# EUROPÄISCHE PATENTANMELDUNG

(11) **EP 2 487 436 A1**
(43) Veröffentlichungstag der Anmeldung: **15.08.2012**
(21) Anmeldenummer: 11001120.2
(22) Anmeldetag: 11.02.2011
(51) Int. Cl.: F24J 2/52

(54) **Klemmverbindung zur Befestigung von plattenförmigen Bauelementen insbesondere von Solarmodulen**

(71) Anmelder: Carl Freudenberg KG, 69469 Weinheim (DE)
(72) Erfinder: Barth, Armin, 69517 Gorxheimertal (DE); Hube, Gerhard, Dr., 69198 Schriesheim (DE); Littig, Michael, 67679 Kaiserslautern (DE); Hindermann, Volker, 74613 Öhringen (DE); Delp, Patrick, 74679 Weißbach (DE); Müller, Uwe, 67346 Speyer (DE); Strachan, Ole, 64342 Seeheim-Jugenheim (DE)

(57) **Zusammenfassung**

Klemmverbindung (1) zur Befestigung von plattenförmigen Bauelementen, insbesondere von Solarmodulen auf schienenförmigen, mit Führungsnuten (5) mit nach innen in die Nut (5) überstehenden Rändern (6, 7) versehenen Trägem (2) aus einer Auflage (3) mit wenigstens einer auf ihrer Oberseite vorhandenen Auflagefläche (12) für ein Bauelement und mit einem die Auflagefläche (12) bzw. -flächen (12) begrenzenden Stützbalken (15) und mit einem auf ihrer Unterseite (8) vorhandenen Widerlager (9) in T-Form, dessen Querbalken (11) in Längsrichtung der Führungsnut (5) ausgerichtet in die Führungsnut (5) einsetzbar ist und nach einer Drehung um 90° die überstehenden Ränder (6, 7) der Führungsnut (5) hintergreifen, und aus einer Klemmkappe 4 mit die Auflagefläche (12) bzw. -flächen (12) abdeckenden Klemmfläche (13) bzw.-flächen (13) und einer den oberen Teil des Stützbalkens (15) erfassenden Längsnut (16) sowie einer zentralen, die Klemmkappe (4) und die Auflage (3) durchdringenden Durchgangsbohrung (17), wobei die Klemmkappe (4) und die Auflage (3) über eine Rastverbindung (18, 19, 20) miteinander fixiert sind.

## Beschreibung

### Technisches Gebiet

Klemmverbindungen zur Befestigung von plattenförmigen Bauelementen sind allgemein bekannt. Dabei haben heutzutage Klemmverbindungen für Solarmodule besondere Bedeutung erreicht Für diese Module ist es von besonderer Wichtigkeit, dass sie im Hinblick auf sehr hohe mechanische Belastungen, beispielsweise durch Wind oder Schneefall und auch wegen der Größe und des Gewichts der Module sehr stabil sein sollen. Gleichzeitig aber sollen keine Verspannungen an den Modulen auftreten, da diese zu Rissbildungen an den Modulen führen können.

### Stand der Technik

Zum Stand der Technik kann auf die DE 20 2008 002 264 U1 und auch auf die US 2009/0200443 A1 verwiesen werden. Diese bekannten Klemmverbindungen sind wenig zufriedenstellend, da sie aus einer Vielzahl von Einzelteilen bestehen, die Vorort aufwendig zu montieren sind. Durch die Vielzahl der Einzelteile ist das Handling während der Montage erschwert, insbesondere auch deshalb, weil die Montage in aller Regel auf schräg liegenden Trägern zu erfolgen hat. Die schräge Ausrichtung der Träger führt dazu, dass die Einzelteile zueinander verrutschen und immer wieder neu justiert werden müssen.

In unserer älteren Patentanmeldung EP 09 012 682 ist eine verbesserte Klemmverbindung dargestellt, die einen einfachen Aufbau hat und bei der eine erleichterte Montage gegeben ist. Diese Klemmverbindung besteht im Wesentlichen aus drei Teilen: nämlich einer Klemmauflage, einer Klemmkappe und einer Befestigungsschraube. Die Auflage hat an ihrer Unterseite ein Widerlager in einer T-Form, dessen Fuß von der Unterseite der Auflage absteht und einen Querbalken hat, der in die Führungsnut des Trägers eingesetzt die überstehenden Ränder der Führungsnut hintergreift. Auf diese Weise ist eine sehr einfache Montage der Klemmauflage am Träger möglich. An der Klemmauflage wird die Klemmkappe aufgesetzt und mittels der Befestigungsschraube daran verschraubt. Dabei werden die Seiten der Module erfasst und an die Auflage angedrückt. Auf der Oberseite der Auflage ist ein Stützbalken vorhanden, der gleichzeitig als Abstandshalter für die aufgelegten Module vorgesehen ist.

### Darstellung der Erfindung

Der Erfindung liegt die Aufgabe zugrunde, die in der älteren Patentanmeldung dargestellte Klemmverbindung weiter zu verbessern, um ihre Montage zu erleichtern und gleichzeitig auch ihre Demontage zu erschweren, um Diebstähle von Solarmodulen zu verhindern. Die Klemmverbindung soll somit auch gleichzeitig mit einer Diebstahlsicherung ausgestattet sein.

Die Lösung der gestellten Aufgabe wird mit den Merkmalen des Anspruchs 1 erreicht. Die Unteransprüche 2 bis 15 stellen vorteilhafte Weiterbildungen des Erfindungsgedankens dar.

Ausgangslage für die vorliegende Klemmverbindung ist die in der oben genannten älteren Anmeldung beschriebene Klemmaufnahme. Sie besteht im Wesentlichen aus einer Auflage mit wenigstens einer auf ihrer Oberseite vorhandenen Auflagefläche für ein Bauelement und einem die Auflagefläche bzw. -flächen begrenzenden Stützbalken. Auf ihrer Unterseite hat die Auflage das Widerlager in T-Form, das mit seinem Querbalken in die Führungsnut eingesetzt wird. Die Klemmkappe hat eine bzw. mehrere Klemmflächen, welche den Auflageflächen gegenüberliegen und eine Längsnut, welche den oberen Teil des Stützbalkens einfasst. Zwei Klemmflächen 13, an jeder LSeite eine, sind vorgesehen, wenn zwei Solarmodule erfasst werden sollen. Eine Klemmfläche 13, wenn die Klemmverbindung 1 am äußeren Solarmodul angreifen soll. Auflage und Klemmkappe werden von einer Durchgangsbohrung durchdrungen. Gemäß der Erfindung ist vorgesehen, die Klemmkappe und die Auflage über eine Rastverbindung miteinander zu fixieren. Anstelle der Schraubverbindung wird folglich eine Rastverbindung vorgenommen, über welche die Klemmkappe und die Auflage miteinander unlösbar fixiert sind. Auf diese Weise wird nicht nur eine Vereinfachung der Montage erreicht, sondern gleichzeitig auch eine Diebstahlsicherung.

Die Rastverbindung kann aus einem Raststift bestehen, der eine Rastverzahnung hat, die in eine in der Bohrung der Auflage angebrachte Rastverzahnung eingreift. Die Rastverzahnung am Stift und in der Bohrung besteht aus gegenläufig ausgerichteten Sägezähnen. Eine Verschraubung entfällt, der Raststift wird lediglich in die Bohrung eingedrückt, um die Klemmkappe an der Auflage zu befestigen. Damit die Bohrung in der Klemmkappe und in der Auflage fluchtend zueinander liegen, ist lediglich die Klemmkappe so auf die Auflage aufzusetzen, dass ihre Seitenflächen zueinander fluchtend sind. Diese Befestigungsweise hat auch den Vorteil, dass verschiedene Stärken von Solarmodulen durch die Klemmverbindung erfasst werden können, da der Raststift hierfür lediglich unterschiedlich tief in die Bohrung eingedrückt werden muss.

Es ist von Vorteil, wenn in die Auflage in ihrem unteren Teil ein Insert eingesetzt wird, in dem der Sägezahnabschnitt in der Bohrung eingebracht ist. Dieses Insert kann beispielsweise aus einem Kunststoff hergestellt sein, so dass bei der Verwendung eines ebenfalls aus Kunststoff bestehenden Raststiftes eine sehr feste Verbindung zwischen Klemmkappe und Auflage erreicht wird. Das Insert kann außerdem seitliche Ausleger haben, welche an der Unterseite der Querbalken des Widerlagers anliegen. Sie entsprechen dann in etwa der Form der Querbalken des Widerlagers. Die radial außenliegenden und die axial nach oben weisenden Flächen des Inserts sind bevorzugt mit einer Elastomerbeschichtung versehen, die eine elastische Unterbringung des Widerlagers in der Führungsnut des Trägers ergeben. Dieses kann sehr einfach hergestellt werden, indem das Insert an die Auflage anvulkanisiert wird.

Eine andere Ausführungsform der vorliegenden Erfindung kann dadurch erreicht werden, dass die Rastverbindung aus einem Raststift besteht, der an seinem unteren Ende Rastnasen hat, die in Einschnitte am unteren Rand der Bohrung oder an einem Hinterschnitt in der Bohrung einrasten. Diese Ausführungsform ist hauptsächlich für Anwendungen und für Module mit gleichbleibender Stärke gedacht.

Um die Einführung des Raststiftes in die mit der Rastverzahnung versehene Bohrung zu erleichtern, kann er über die gesamte Länge der Sägeverzahnung mit mindestens einem Längsschnitt versehen werden. Hierdurch wird ein leichtes Zusammendrücken des betreffenden Teils des Raststiftes bei der Einführung desselben in die Bohrung erleichtert. Dieser Schlitz kann auch bei einem Raststift angewendet werden, der an seinem Ende mit Rastnasen versehen ist. Bevorzugt werden jedoch zwei Längsschlitze vorgesehen, so dass der Rasterstift gevierteilt wird. Durch die Anbringung der Schlitze entsteht in der Mitte des Raststiftes eine viereckige Öffnung, in die ein Sperrstift eingesetzt werden kann, welcher verhindert, dass die einzelnen Teile des Raststiftes zusammengedrückt werden können. Durch eine Verlängerung der genannten Öffnung bis hin zur Oberfläche des Raststiftes besteht die Möglichkeit, den Sperrstift von oben her in den Raststift einzubringen, Dabei wird ein Sperrstift gewählt, welcher In etwa die gleiche Länge wie der Raststift hat Auf diese Welse kann eine sehr feste Diebstahlslcherung erreicht werden.

In der bevorzugten Ausführungsform wird die Auflage aus einem Elastomer und die Klemmkappe aus einem Kunststoff gebildet. Die Klemmflächen der Klemmkappe sind dabei mit einem Sillkonüberzug zu versehen, um ein zu hartes Anpressen am eingesetzten Modul zu vermeiden.

### Kurzbeschreibung der Zeichnung

In der bellegenden Zeichnung sind mehrere Ausführungsformen der Erfindung schematisch dargestellt.

Es zeigt:
- Fig.1: eine Schrägansicht der an einem Träger befestigten Klemmverbindung;
- Fig. 2: einen Querschnitt durch die Klemmverbindung nach Fg.1 mit einer Rastverbindung über eine Rastverzahnung;
- Fig. 3: eine Rastverbindung mittels eines Raststiftes mit Rastnasen an einem unteren Ende; und
- Fig. 4: einen vergrößerter Ausschnitt der Rastverbindung nach Fig. 3.

### Ausführung der Erfindung

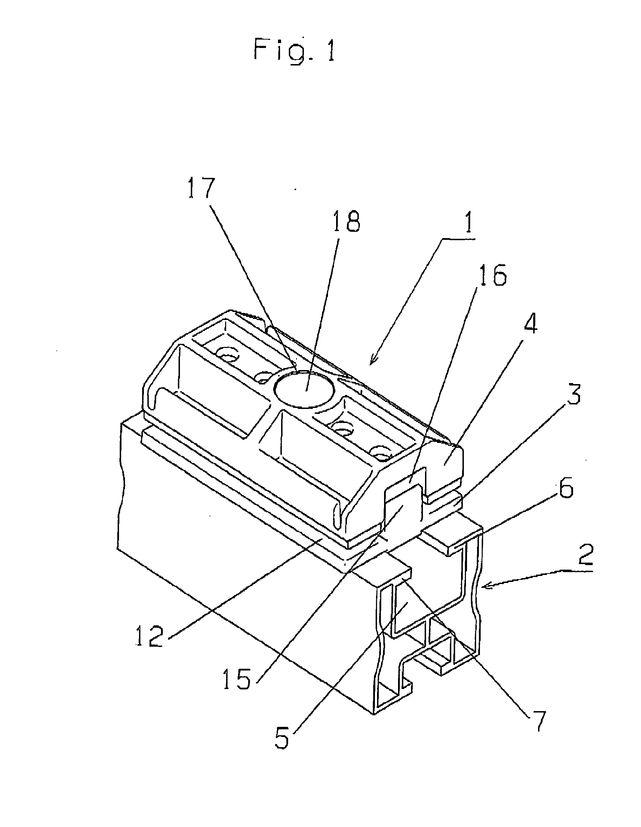

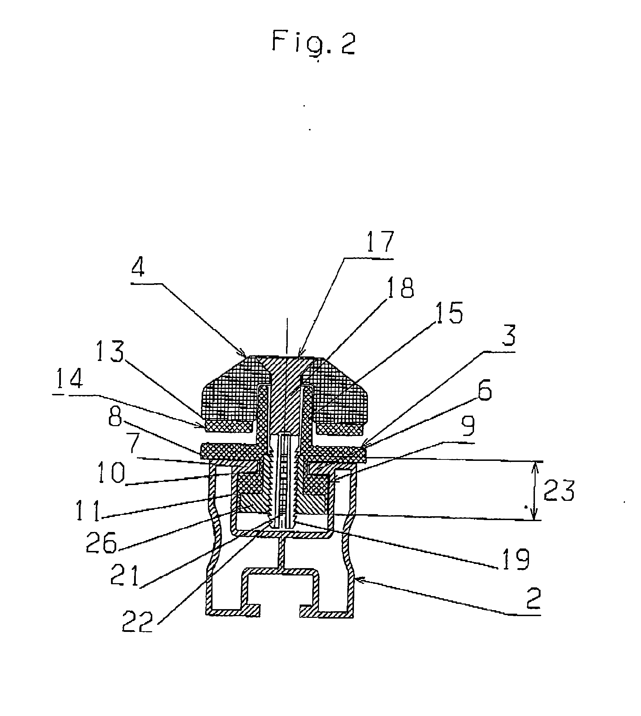

In der Fig. 1 ist in der Schrägansicht die auf dem Träger 2 angebrachte Klemmverbindung 1 gezeigt. In die Klemmverbindung 1 können in bekannter Weise Solarmodule eingefügt und darin festgeklemmt werden. Die Solarmodule sind nicht näher gezeigt. Die Klemmverbindung 1 besteht aus der Auflage 3 und der Klemmkappe 4. Die Träger 2 sind Strangprofile mit der Führungsnut 5, mit den überstehenden Rändern 6 und 7. In die Führungsnut 5 ist ein an der Unterseite der Auflage 3 angebrachtes Widerlager 9 in T-Form vorhanden (siehe Fig. 2). Der Fuß 10 des Widerlagers 9 schließt an die Unterseite 8 der Auflage 3 an, während der Querbalken 11 in der Führungsnut 5 liegt. Bei der Anbringung der Auflage 3 am Träger 2 wird der Querbalken 11 zunächst in Längsrichtung der Führungsnut 5 ausgerichtet, indem die Klemmkappe 4 eine Position einnimmt, die um 90° zum Träger 2 verdreht ist. Nach dem Einführen des Widerlagers 9 in die Führungsnut 5 und Verdrehen der Klemmkappe 4 um 90° kommt der Querbalken 11 unter den überstehenden Rändern 6, 7 der Führungsnut 5 zu liegen, Die Auflage 3 ist aus einem Elastomer gebildet. Ihre Oberfläche ist mit Längsrillen versehen, so dass sie leicht nachgiebig ist. Die Klemmkappe 4 besteht aus einem Kunststoff. Ihre Klemmenflächen 13 sind mit einem Silikonüberzug 14 versehen. Auf diese Weise werden die Solarmodule zerstörungsfrei zwischen Klemmkappe 4 und Auflage 3 gehalten. Die Auflage 3 ist mit einem Stützbalken 15 versehen, der in eine Längsnut 16 der Klemmkappe 4 eingreift. Dabei wird nur der obere Teil des Stützbalkens 15 von der Längsnut 16 umfasst. Auf diese Weise ist die Klemmkappe 4 mit der Auflage 3 verdrehsicher verbunden. Mittig sind die Klemmkappe 4 und die Auflage 3 mit einer Durchgangsbohrung 17 versehen, in die ein Raststift 18 eingesetzt ist.

Die Fig. 2 zeigt einen Querschnitt durch die Mitte der Klemmverbindung 1. Hier ist die im unteren Teil des Raststiftes 8 angebrachte Rastverzahnung 19 sichtbar. In der Bohrung 17, welche die Auflage 3 durchdringt, ist die Gegenverzahnung 20 angebracht. Beim Eindrücken des Raststiftes 18 in die Bohrung 17 greifen die Verzahnungen 19 und 20 ineinander und haften dadurch die Klemmkappe 4 an der Auflage 3. Die Rastverzahnung 20 in der Bohrung 17 der Auflage 3 und die Rastverzahnung 19 am Raststift 18 sind sägezahnförmig mit gegenläufig ausgerichteten Sägezähnen. Über die Länge der am Raststift 17 angebrachten Sägezähne hat der Raststift 18 zwei Längsschlitze 21, die kreuzförmig zueinander angeordnet sind. Diese Längsschlitze 21 erlauben ein radiales Zusammendrücken der durch die Längsschlitze 21 entstandenen Hakenarme 22. Im Ausführungsbeispiel nach der Fig. 2 wird der Sägezahnabschnitt 23 in der Bohrung 17 durch ein Insert 24 aus Kunststoff gebildet. Dieses Insert 24 hat seitliche Ausleger 26, die an der Unterseite des Querbalkens 11 des Widerlagers 9 anliegen. Die radial außen liegenden Flächen des Inserts 24 sind von dem Elastomer der Auflage 3 umfasst. Dabei kann das Insert 24 in die Auflage 3 einvulkanisiert sein, Diese Rastverbindung ist vielseitig einsetzbar, insbesondere für unterschiedliche Dicken der Solarmodule.

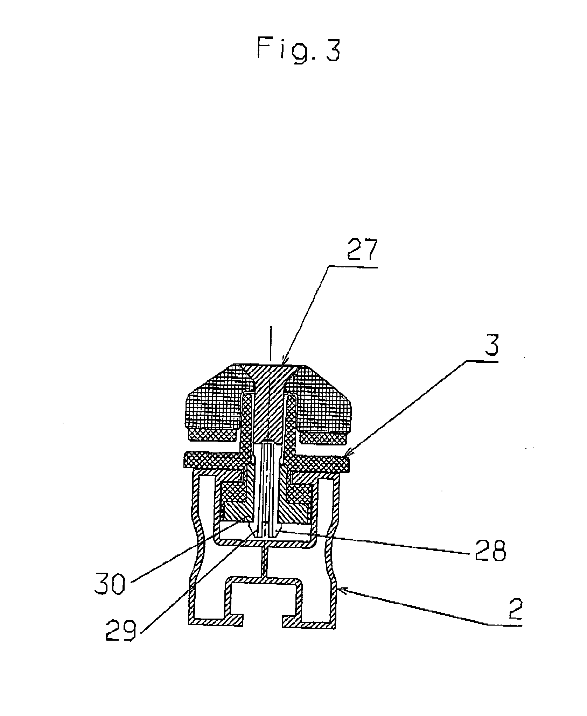

In der Fig. 3, die ebenfalls einen Querschnitt durch die Mitte der Klemmverbindung 1 zeigt, ist eine Rastverbindung dargestellt, die auf eine vorgegebene Dicke eines Solarmoduls ausgerichtet ist. Hier hat der Raststift 27 an seinem unteren Ende Rastnasen 28, die in Einschnitte am unteren Rand der Bohrung 18 bzw. des Inserts 24 oder einen Hinterschnitt in der Bohrung 18 bzw. des Inserts 24 einrasten. Der Raststift 27 hat am unteren Ende die in Kreuzform angebrachten Längsschlitze 29, welche ein Zusammendrücken der Enden 30 des Stiftes 27 beim Einführen in die Bohrung in der Auflage 3 ermöglichen.

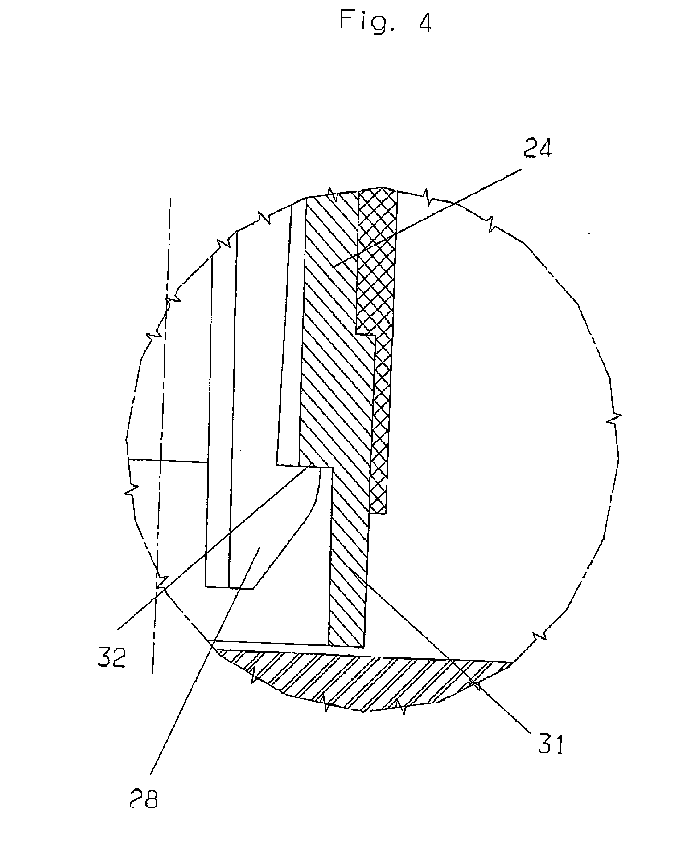

In der Fig. 4 ist vergrößert eine Ausgestaltung einer Rastnase 28 gezeigt, die das untere Ende des Inserts 24 darstellt. Hier ist das Insert 24 in Form einer Buchse 31 nach unten verlängert und liegt damit beim Eindrücken des Raststiftes 27 an dem Boden der Führungsnut 5 des Träger 2 an. In der Buchse 31 des Inserts 24 ist der Hinterschnitt 32 vorhanden, hinter welchem die Rastnase 28 beim Eindrücken einrastet.

## Patentansprüche

1. Klemmverbindung (1) zur Befestigung von plattenförmigen Bauelementen, insbesondere von Solarmodulen auf schienenförmigen, mit Führungsnuten (5) mit nach innen in die Nut (5) überstehenden Rändern (6, 7) versehenen Trägem (2) aus einer Auflage (3) mit wenigstens einer auf ihrer Oberseite vorhandenen Auflagefläche (12) für ein Bauelement und mit einem die Auflagefläche (12) bzw. -flächen (12) begrenzenden Stützbalken (15) und mit einem auf ihrer Unterseite (8) vorhandenen Widerlager (9) in T-Form, dessen Querbalken (11) in Längsrichtung der Führungsnut (5) ausgerichtet in die Führungsnut (5) einsetzbar ist und nach einer Drehung um 90° die überstehenden Ränder (6, 7) der Führungsnut (5) hintergreifen, und aus einer Klemmkappe 4 mit die Auflagefläche (12) bzw. flächen (12) abdeckenden Klemmfläche (13) bzw. -flächen (13) und einer den oberen Teil des Stützbalkens (15) erfassenden Längsnut (16) sowie einer zentralen, die Klemmkappe (4) und die Auflage (3) durchdringenden Durchgangsbohrung (17), **dadurch gekennzeichnet, dass** die Klemmkappe (4) und die Auflage (3) über eine Rastverbindung (18, 19, 20) miteinander fixiert sind.

2. Klemmverbindung (1) nach Anspruch 1, **dadurch gekennzeichnet, dass** die Rastverbindung (18, 19) aus einem Raststift (18) besteht, der eine Rastverzahnung (19) hat, die in eine in der Bohrung (17) der Auflage (3) angebrachte Rastverzahnung (20) eingreift.

3. Klemmverbindung nach Anspruch 1 oder 2, **dadurch gekennzeichnet, dass** die Rastverzahnung (19, 20) in der Bohrung (17) und am Stift (18) sägezahnförmig gegenläufig ausgerichtete Sägezähne hat.

4. Klemmverbindung nach einem der Ansprüche 1 bis 3, **dadurch gekennzeichnet, dass** der Raststift (17) über die Länge der Sägeverzahnung (19) mindestens einen Längsschlitz (21) hat.

5. Klemmverbindung nach einem der Ansprüche 1 bis 4, **dadurch gekennzeichnet, dass** die Auflage (3) aus einem Elastomer besteht.

6. Klemmverbindung nach einem der Ansprüche 1 bis 5, **dadurch gekennzeichnet, dass** die Klemmkappe (4) aus einem Kunststoff besteht.

7. Klemmverbindung nach einem der Ansprüche 1 bis 6, **dadurch gekennzeichnet, dass** die Klemmfläche (13) bzw. Klemmflächen (13) der Klemmkappe (4) einen Silikonüberzug (14) haben.

8. Klemmverbindung nach einem der Ansprüche 1 bis 7, **dadurch gekennzeichnet, dass** der Sägezahnabschnitt (23) in der Bohrung (17) durch ein Insert (24) gebildet ist.

9. Klemmverbindung nach Anspruch 8, **dadurch gekennzeichnet, dass** das Insert (24) aus einem Kunststoff besteht.

10. Klemmverbindung nach Anspruch 8 oder 9, **dadurch gekennzeichnet, dass** das Insert (24) seitliche Ausleger (26) hat, die an der Unterseite des Querbalkens (11) des Widerlagers (9) anliegen.

11. Klemmverbindung nach einem der Ansprüche 8 bis 10, **dadurch gekennzeichnet, dass** die radial außenliegenden Flächen des Inserts (24) von dem Elastomer der Auflage (3) umfasst sind.

12. Klemmverbindung nach Anspruch 10. **dadurch gekennzeichnet, dass** das Insert (24) in die Auflage (3) einvulkalnisiert ist.

13. Klemmverbindung nach Anspruch 1, **dadurch gekennzeichnet, dass** die Rastverbindung aus einem Raststift (27) besteht, der an seinem Ende Rastnasen (28) hat, die in Einschnitte (32) am unteren Rand der Bohrung (18) bzw. des Inserts (24) oder an einem Hinterschnitt (32) In der Bohrung (18) bzw. des Inserts (24) einrasten.
